# EUROPÄISCHE PATENTSCHRIFT

(11) **EP 2 499 992 B1**
(45) Veröffentlichungstag und Bekanntmachung des Hinweises auf die Patenterteilung: **13.09.2017**
(21) Anmeldenummer: 12450016.6
(22) Anmeldetag: 12.03.2012
(51) Int. Cl.: A61C 9/00, G01B 11/25

(54) **Vorrichtung zum Aufnehmen von Bildern von dreidimensionalen Objekten**
Device for taking pictures of three-dimensional objects
Dispositif de capture d'images d'objets tridimensionnels

(30) Priorität: 18.03.2011 AT 3872011
(43) Veröffentlichungstag der Anmeldung: 19.09.2012
(73) Patentinhaber: a.tron3d GmbH, 9020 Klagenfurt am Wörthersee (AT)
(72) Erfinder: Nowak, Christoph, 1100 Wien (AT); Koinig, Horst, 9020 Klagenfurt (AT); Jesenko, Jürgen, 9161 Maria Rain (AT)
(74) Vertreter: Beer & Partner Patentanwälte KG

(56) Entgegenhaltungen:
- EP-A1- 2 295 932
- WO-A1-2010/021972
- DE-A1- 19 747 061
- DE-A1- 19 818 076
- DE-A1-102007 060 263
- DE-U1- 9 013 454
- US-A1- 2003 072 011
- US-A1- 2010 073 461
- US-A1- 2011 001 818

## Beschreibung

Die Erfindung betrifft eine Vorrichtung zum Aufnehmen von Bildern von dreidimensionalen Objekten, insbesondere Zähnen, gemäß dem Oberbegriff der Ansprüche 1 und 2.

Derartige Vorrichtungen, die beispielsweise aus der AT 508 563 B bekannt sind, werden insbesondere im Bereich der dreidimensionalen Aufnahme von Zähnen verwendet. Dabei wird ein nach einem Zufallsprinzip angeordnetes Muster auf das Objekt projiziert, wobei im Strahlengang der Lichtquelle ein transparenter Träger, z.B. ein Dia, mit dem Muster angeordnet ist. Der Anwendungsbereich erstreckt sich dabei auf die Aufnahme von digitalen Zahn- und Kieferabdrücken, die Hilfestellung bei der Diagnose, die Überwachung von Zahnbehandlungen sowie die zuverlässige Kontrolle von eingesetzten Implantaten. Neben weiteren Einsatzgebieten im Bereich der Medizin- und Industrietechnik, beispielsweise im Bereich der Endoskopie, können generell Objekte stereometrisch vermessen werden, die schwer zugänglich sind. EP 2 295 932 A1 offenbart eine Vorrichtung zum Aufnehmen von Bildern von dreidimensionalen Objekten, gemäß der Präambel von Anspruch 1.

DE 90 13 454 U1 offenbart eine Vorrichtung zum Aufnehmen von Bildern von dreidimensionalen Objekten, gemäß der Präambel von Anspruch 2. Probleme bestehen hierbei zum einen in der erforderlichen Miniaturisierung der Projektions- und Aufnahmeeinheit und zum anderen in den hohen Anforderungen an die Qualität der Aufnahmen. Insbesondere im Bereich der Zahnheilkunde sind oft Abmessungen von etwa 0,1-0,2mm relevant, sodass eine Auflösung von im Bereich von etwa 0,01-0,04mm erforderlich ist, um sämtliche Details der abzubildenden Gegenstände mit hinreichender Auflösung zu erfassen. Aufgabe der Erfindung ist es daher, eine Vorrichtung zur Verfügung zu stellen, die eine präzise Aufnahme dreidimensionaler Objekte, wie Zähne, ermöglicht.

Gelöst wird diese Aufgabe durch eine Vorrichtung der eingangs genannten Art mit denMerkmalen des Anspruchs eins sowie eine Vorrichtung mit den Merkmalen des Anspruchs 2.

Wenn Teile des Lichtbündels mit dem Muster bis zum abzubildenden Objekt unterschiedlich lange Wege zurücklegen, beispielsweise weil die optische Mittelachse des Projektors zur optischen Mittelachse der Kamera geneigt ist oder weil Lichtbündel über unterschiedliche Spiegel zum Objekt gerichtet werden, können bei der Projektion des auf einem Träger vorhandenen Musters auf das Objekt Unschärfen der Projektion des Musters entstehen. Dies führt zu Ungenauigkeiten der Messung.

Diese Abweichung kann erfindungsgemäß dadurch kompensiert werden, dass entweder einzelne Abschnitte eines Trägers oder zwei oder mehr Träger in Richtung des Strahlengangs zueinander versetzt sind. Auf diese Weise kann die Länge des Wegs, den das Licht mit dem Muster vom Träger bis zum Objekt zurücklegt, wieder für das gesamte Lichtbündel vereinheitlicht und somit Unschärfen verringert werden.

Die erfindungsgemäße Anordnung von Trägern ist insbesondere dann von Vorteil, wenn wenigstens zwei Spiegel jeweils ein Lichtbündel von der Lichtquelle aus unterschiedlichen Richtungen auf das Objekt reflektieren und im Strahlengang jedes Lichtbündels ein Abschnitt eines Trägers oder jeweils ein eigener Träger liegt, da sich bei zwei Spiegeln häufig unterschiedliche Weglängen des Lichts nicht vermeiden lassen.

Auf der anderen Seite ist die Verwendung von zwei Spiegeln aber besonders vorteilhaft, da durch die beiden Spiegel, welche Licht von der Lichtquelle aus unterschiedlichen Richtungen auf das Objekt reflektieren, eine bessere Beleuchtung der Objekte ermöglichen lässt bzw. eine einseitige, schräge Beleuchtung des Bildfeldes am Objekt bzw. Zahn, das unter Umständen z.B. in einem Kantenbereich vom Objekt selbst oder benachbarten Objekten partiell abgeschattet wird, weitgehend vermieden werden kann, wodurch Bereiche wie z.B. der letzte Backenzahn auch an der Rückseite gut ausgeleuchtet und aufgenommen bzw. in weiterer Folge vermessen werden können.

Eine besonders gute Ausleuchtung des Objektes für eine Bildaufnahme ist dann möglich, wenn, von der Lichtquelle aus betrachtet, ein erster

Spiegel hinter einem Objektiv der Kamera und ein zweiter Spiegel vor dem Objektiv liegt. Auf diese Weise wird das Objekt von zwei bezüglich der Kamera gegenüber liegenden Seiten beleuchtet, sodass eine Beschattung des Bildfeldes am Objekt zuverlässig vermieden werden kann.

Wenn eine dreidimensionale Bildaufnahme und in weiterer Folge Vermessung eines Objektes erfolgen soll, ist bei der Erfindung bevorzugt, wenn zwei Kameras vorgesehen sind, welche Bilder aus unterschiedlichen Richtungen aufnehmen. Aus dem Stand der Technik, beispielsweise der AT 508 563 B, sind bereits eine Vorrichtung und ein Verfahren zum Vermessen von Objekten wie Zähnen bekannt, welche dreidimensionale Bilder liefern. Diese aber auch andere bekannte Vorrichtungen und Verfahren können bei der vorliegenden Erfindung zum Einsatz kommen, um dreidimensionale Bilder zu erzeugen.

Demgemäß können bei der Erfindung zwei Kameras vorgesehen sein, welche Bilder aus unterschiedlichen Richtungen aufnehmen, wobei bevorzugt ist, wenn die Kameras, von der Lichtquelle aus betrachtet, nebeneinander liegen.

Wenn bei einer Ausführungsform der Erfindung die optischen Achsen der Spiegel in einer Ebene liegen und die Objektive der Kameras symmetrisch zu der Ebene liegen, in denen die optischen Achsen der Spiegel liegen, dann ist durch diese symmetrische Anordnung eine besonders zuverlässige Ausleuchtung bzw. Bildprojektion und Bildaufnahme möglich, die zu sehr präzisen dreidimensionalen Bildern führt, da bei der Vermessung von Kantenbereichen (z.B. Schneidezähne) keine Fehlstellen in den Punktwolken auf dem Objekt entstehen, welche die Aufnahme und Registrierung der Geometrie des Objekts in diesem Bereich erschweren oder unmöglich machen würde. Außerdem ermöglicht diese Anordnung eine sehr kompakte, insbesondere schlanke Bauweise.

Weitere bevorzugte Ausführungsformen der Erfindung sind Gegenstand der übrigen Unteransprüche.

Weitere Merkmale und Vorteile der Erfindung ergeben sich aus der nachfolgenden Beschreibung bevorzugter Ausführungsbeispiele der Erfindung unter Bezugnahme auf die angeschlossenen Zeichnungen.

Es zeigt:
- Fig. 1: eine Ausführungsform eines Handstücks für die Erfindung von der Seite,
- Fig. 2: das Handstück von Fig. 1 in Draufsicht,
- Fig. 3: das Handstück von Fig. 1 von vorne
- Fig. 4: das Handstück der Fig. 1 bis 3 im Schrägriss,
- Fig. 5: eine teilweise Explosionsdarstellung einer Ausführungsform der Erfindung,
- Fig. 6: einen Längsschnitt durch die Ausführungsform von Fig. 5,
- Fig. 7: ein Detail von Fig. 6,
- Fig. 8: einen Schnitt durch die Vorrichtung entlang der Linie VIII-VIII und
- Fig. 9: ein Detail einer Ausführungsform eines Projektors.

In den Zeichnungen ist eine bevorzugte Ausführungsform einer Vorrichtung 1 zur dreidimensionalen Aufnahme von Objekten 10, insbesondere Zähnen dargestellt, die einen Aufnahmebereich 2 und einen Griffbereich 3 aufweist. Zwischen Aufnahmebereich 2 und Griffbereich 3 ist im dargestellten Ausführungsbeispiel ein Mittelbereich 5 angeordnet. Da der Mittelbereich 5 kleinere Außenabmaße aufweist als der Aufnahmebereich 2, weist der Aufnahmebereich 2 einen im Wesentlichen konischen Übergangsbereich 6 zum Mittelbereich 5 hin auf. Am vorderen Ende 4 ist der Aufnahmebereich 2 abgerundet.

Der Aufnahmebereich 2 weist eine Mittelachse 7 auf, der Griffbereich 3 der Mittelachse 8 und der Mittelbereich 5 eine Mittelachse 9. Der Winkel α zwischen der Mittelachse 7 und der Mittelachse 8 liegt erfindungsgemäß zwischen 10° und 40°, wobei sich dieser Winkel α im dargestellten Ausführungsbeispiel (mit einem Mittelbereich 5) in zwei Winkel β und γ aufteilt, wobei der Winkel β zwischen der Mittelachse 7 des Aufnahmeteils 2 und der Mittelachse 9 des Mittelbereichs 5 liegt und der Winkel γ zwischen der Mittelachse 9 des Mittelbereichs 5 und der Mittelachse 8 des Griffteils 3 liegt. Der Winkel β liegt bevorzugt zwischen 3° und 15° und der Winkel γ zwischen 7° und 25°. Die Länge des Aufnahmebereichs liegt bevorzugt zwischen 10 und 60 mm, da innerhalb dieser Grenzen sowohl eine gute Handhabbarkeit des Handstücks 1 als auch ausreichend Raum zum Unterbringen der Projektions- und/oder Aufnahmetechnik vorhanden ist.

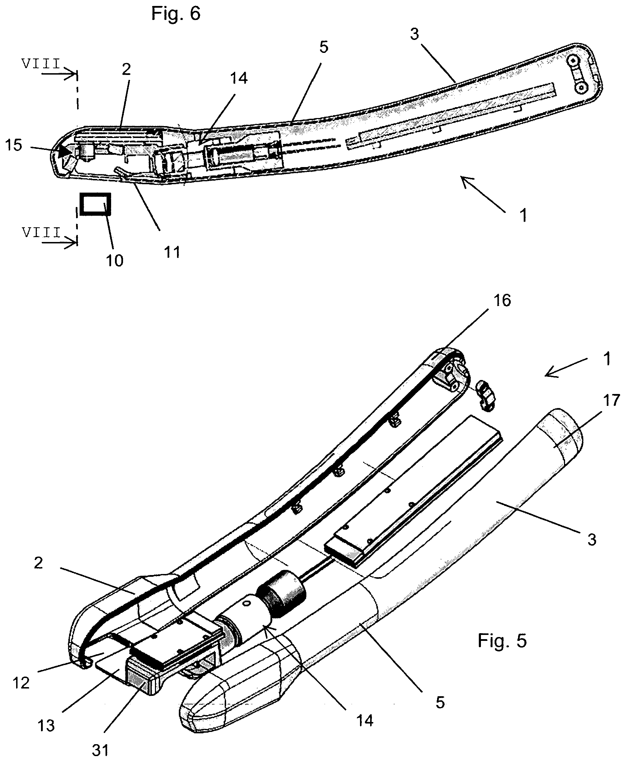

An seiner dem aufzunehmendem Objekt 10 zugewandten Seite 11 ist im Aufnahmeteil 2 eine Öffnung 12 (Fig. 5) angeordnet, die von einer Scheibe 13 verschlossen ist. Durch diese Scheibe 13 können mit einem Projektor 14 Licht, insbesondere ein Zufallsmuster, auf das Objekt 10 gerichtet und mit einem Kamerasystem 15 Bilder des Objektes 10 aufgenommen werden. Der Aufnahmebereich 2 ist somit gegenüber dem Griffbereich 3 um einen Winkel α zwischen 10° und 40° entgegen der Projektionsrichtung nach hinten geneigt.

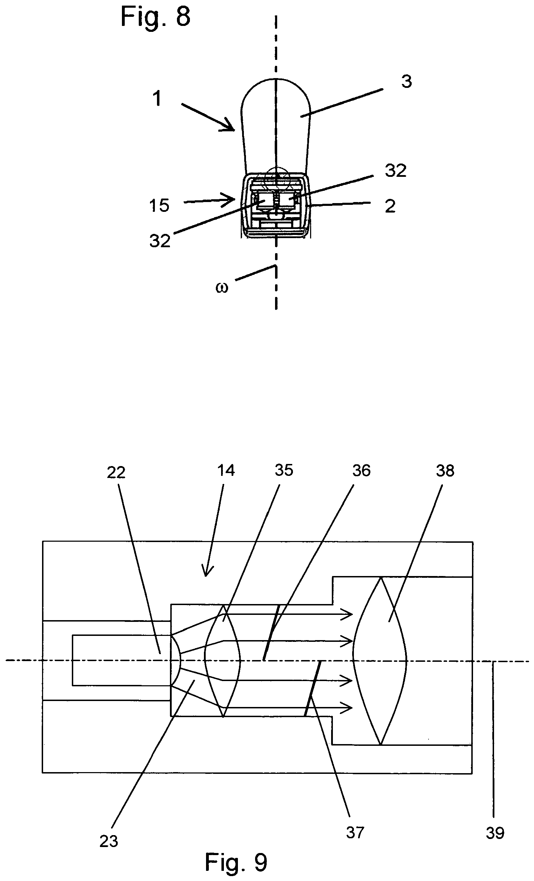

In den Fig. 5 bis 8 ist eine Ausführungsform der Erfindung dargestellt, bei welcher der Projektor 14 mit einer Lichtquelle ein Lichtbündel 23 abstrahlt. Das Lichtbündel 23 tritt durch einen oder mehrere in Fig. 9 dargestellte transparente Träger 36, 37, beispielsweise Dias, auf denen ein nach einem Zufallsprinzip angeordnetes Muster angeordnet ist. Das Muster besteht bevorzugt aus im Wesentlichen zufällig verteilten, gegebenenfalls unregelmäßig geformten Punkten und/oder Linien, die in weiterer Folge auf das Objekt 10, beispielsweise einen Zahn, projiziert werden.

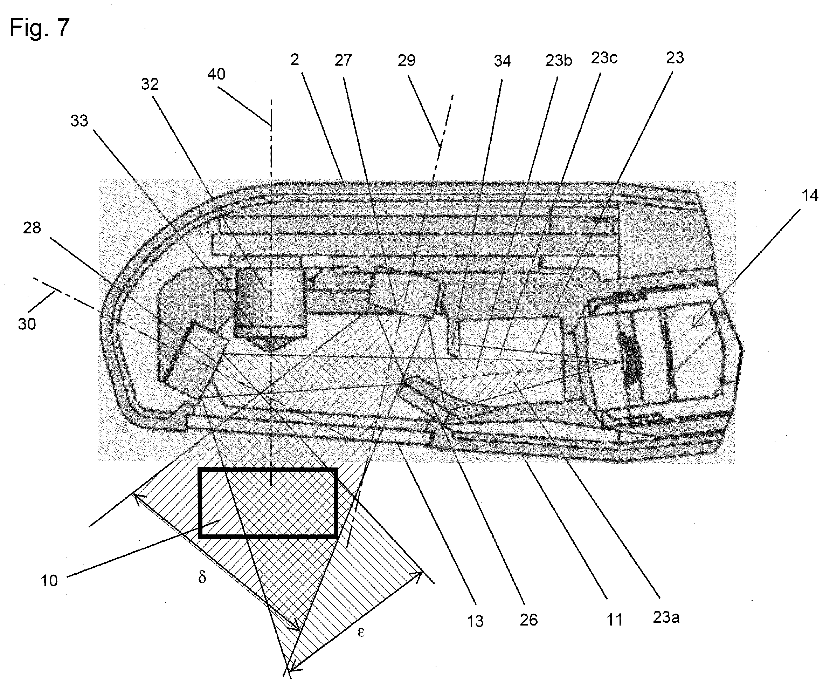

Im Strahlengang des Lichtbündels 23 liegt ein Umlenkspiegel 26, der einen Teil 23a des Lichtbündels 23, im Ausführungsbeispiel von Fig. 7 den untersten Teil, auf einen ersten Spiegel 27 umlenkt, der in weiterer Folge das Licht auf das Objekt 10 richtet. Ein weiterer Teil 23b des Lichtbündels 23, im Ausführungsbeispiel von Fig. 7 der mittlere Teil, trifft direkt auf einen zweiten Spiegel 28, von dem das Licht ebenfalls auf das Objekt 10 gerichtet wird.

Der Umlenkspiegel 26 ist bevorzugt ein ebener Spiegel, könnte bei Bedarf aber auch ein konvex oder konkav gekrümmter Spiegel sein. Die beiden Spiegel 27 und 28 sind bevorzugt zweiachsig konvex gekrümmte Spiegel mit gleichen oder unterschiedlichen Krümmungsradien in den beiden Achsen, mit denen der jeweilige Anteil des Strahlenbündels 23 je nach Bedarf stärker gestreut werden kann.

Im dargestellten Ausführungsbeispiel ist die Anordnung und Krümmung des Umlenkspiegels 26 und des ersten Spiegels 27 so gewählt, dass der Teil 23a des Lichtbündels 23 in der Bildebene der Zeichnung einen Öffnungswinkel 5 von etwa 30° hat. Die Anordnung und Krümmung des zweiten Spiegels 28 ist beispielhaft so gewählt, dass der Teil 23b des Lichtbündels 23 in der Bildebene der Zeichnung einen Öffnungswinkel ε von etwa 25° hat. Der Öffnungswinkel der Teile 23a, 23b des Lichtbündels 23 in Richtung normal zur Bildebene der Zeichnung kann durch geeignete Krümmung der Spiegel 27, 28 je nach Anforderung gleich oder unterschiedlich zum jeweiligen in der Bildebene liegenden Öffnungswinkel δ, ε sein.

Durch die in Fig. 7 beispielhaft gewählte Anordnung der Spiegel 27, 28 sind deren optische Achsen 29, 30 so zueinander geneigt, dass die Lichtbündelteile 23a, 23b aus unterschiedlichen Richtungen auf des Objekt 10 treffen.

In Projektionsrichtung des Projektors 14 gesehen zwischen den beiden Spiegeln 27, 28, im dargestellten Ausführungsbeispiel etwas näher dem zweiten Spiegel 28, ist ein Kamerasystem 15 angeordnet, das im dargestellten Ausführungsbeispiel aus zwei Kameras 32 besteht, welche stereoskopische Bilder zur dreidimensionalen Vermessung des Objektes 10 aufnehmen, indem sie mit einander überschneidenden Aufnahmebereichen Bilder aus unterschiedlichen Richtungen aufnehmen. Die beiden optischen Achsen 29, 30 der Spiegel 27, 28 spannen eine Ebene ω auf, wobei die beiden Kameras 32, genauer gesagt deren Objektive 33, symmetrisch zu beiden Seiten dieser Ebene ω liegen. Durch diese bevorzugte Anordnung liegt das Kamerasystem 15 mit den Spiegeln 26, 27 bzw. deren optischen Achsen 29, 30 in einer Ebene ω, was eine sehr präzise Bildaufnahme und damit Vermessung des Objekts ermöglicht. Durch die Projektion der Lichtbündelteile 23a, 23b durch Spiegel 26, 27, die zu beiden Seiten des Kamerasystems 15 liegen, erfolgt auch eine Ausleuchtung bzw. Projektion des Zufallsmusters auf das Objekt 10 von zwei Seiten in dieser Ebene ω, wodurch - aus Sicht des Kamerasystems 15 betrachtet - Schatten oder Fehlstellen auf dem Objekt 10, die beispielsweise bei Backenzähnen oder Schneidezähnen auftreten können, sehr zuverlässig vermieden werden können.

Grundsätzlich wäre es ebenso möglich, die Spiegel - vom Projektor 14 aus betrachtet - neben den beiden Kameras 32 zu positionieren und gegebenenfalls die beiden Kameras 32 um 90° zu drehen, sodass sie beide in die Ebene ω liegen. Es sind auch mehr als zwei Spiegel, sowohl vor und/oder hinter als auch seitlich der Kameras 32 denkbar, um eine möglichst gute Ausleuchtung bzw. Musterprojektion auf dem Objekt 10 zu erhalten.

Im dargestellten Ausführungsbeispiel ist im Bereich über dem Umlenkspiegel 26 eine Blende 34 angeordnet, die einen dritten Teil 23c des Lichtbündels 23 blockiert, damit dieser keine unerwünschten Reflexionen in der Optik 33 der Kameras 32 verursacht. Je nach Anordnung der Spiegel 26, 27, 28 und der Objektive 33 kann die Blende 34 auch weg gelassen oder anders angeordnet oder geformt sein.

Alle Spiegel 26, 27, 28, die Blende 34 sowie gegebenenfalls auch das Kamerasystem 15 können einstellbar an entsprechenden Halterungen 31 befestigt sein, damit bei Bedarf eine einfache Einstellung und/oder Kalibrierung der einzelnen Komponenten möglich ist. Außerdem können alle oder auch nur ein Teil der vorstehend beschriebenen Komponenten auf einem Trägersystem befestigt und voreingestellt sein, das anschließend in ein Aufnahmegerät eingesetzt werden kann. Das Gehäuse der Vorrichtung 1 besteht vorzugsweise aus zwei Gehäusehälften 16, 17, die spiegelsymmetrisch ausgeführt sind, wodurch die Vorrichtung sehr einfach zusammen gebaut werden kann.

Durch die gewählte und in der Zeichnung beispielhaft dargestellte erfindungsgemäße Anordnung ist eine sehr kompakte und schlanke Bauweise möglich, welche beispielsweise sehr gut in ein Handstück zur dreidimensionalen Aufnahme von Zähnen integriert werden kann.

Bevorzugt kommt die in Verbindung mit den Fig. 5 bis 8 beschriebene Anordnung der Spiegel und Kameras bei Handstücken mit einem abgewinkelten Aufnahmebereich 2 und ggf. Mittelbereich 5 zum Einsatz, da durch die Spiegel 26, 27, 28 eine besonders gute Möglichkeit geboten wird, die gesamte Projektions- und Aufnahmetechnik in ein abgewinkeltes Handstück 1 einzubauen, das sehr schlank ist und durch den Knick insbesondere bei Oralscannern besonders gut handhabbar ist.

Bei der erfindungsgemäßen Vorrichtung kann direkt ab der Außenfläche des Scannerglases 13 bereits ein optimaler Schärfegrad ohne das Risiko von Schatten oder Fehlstellen erreicht werden, um auch bei Auflage des Scanners auf einem Objekt, z.B. einem Zahn, dieses bereits vermessen werden kann, wogegen bekannte Scanner häufig in einem bestimmten Abstand zu den Zähnen gehalten werden müssen, was den Aufnahmeprozess, im Vergleich zur erfindungsgemäßen Möglichkeit auch direkt auf die Zähne auflegen zu können, signifikant erschwert.

In Fig. 9 ist schematisch eine Ausführungsform der Erfindung dargestellt, bei der zwei transparente Träger 36, 37, beispielsweise zwei Dias, auf denen nach einem Zufallsprinzip angeordnete Muster angeordnet sind, im Strahlengang eines Lichtbündels 23 liegen, das von einer Lichtquelle 22, beispielsweise einer LED ausgestrahlt wird. Das Muster kann im Wesentlichen aus zufällig verteilten, gegebenenfalls unregelmäßig geformten, Punkten und/oder Linien bestehen. Das Licht geht in der dargestellten Ausführungsform zuerst durch eine Linse 35, dann durch die beiden Träger 36, 37, und in weiterer Folge durch ein symbolisch durch eine Linse 38 dargestelltes weiteres Linsensystem, das zur Ausrichtung des Projektionsstrahles 23 und zur Schärfeneinstellung dient.

Der Projektor 14 von Fig. 9 kann beispielsweise bei einer in den Fig. 5 bis 8 dargestellten Vorrichtung eingesetzt werden, bei der das Lichtbündel 23 über zwei Spiegel 27 und 28 auf ein Objekt 10 gerichtet wird. Da das Licht unterschiedlich lange Wege zurücklegt, je nach dem ob es entweder über den Umlenkspiegel 26 und den Spiegel 27 oder über den Spiegel 28 auf das Objekt 10 trifft, können bei der Projektion des auf einem Träger vorhandenen Musters auf das Objekt 10 Unschärfen der einen oder anderen oder beider Projektionen entstehen.

Durch die Verwendung von zwei Trägern 36, 37 kann darauf Rücksicht genommen und können Unschärfen individuell ausgeglichen werden. Dies kann beispielsweise dadurch erfolgen, dass die beiden Träger 36, 37 in Ausbreitungsrichtung des Lichts zueinander versetzt sind. Damit liegt z.B. der Träger 36, der im Strahlengang des Lichtbündels 23b des Spiegels 28 liegt, weiter hinten bzw. weiter von der Linse 38 bzw. einem nachfolgenden Linsensystem entfernt als der Träger 37, der im Strahlengang des Lichtbündels 23a des Spiegels 27 liegt, sodass insgesamt der Weg des Lichts vom jeweiligen Träger 36, 37 über den/die jeweiligen Spiegel 26, 27, 28 bis zum Objekt 10 wieder ungefähr gleich lang ist. Maßgeblich sind die unterschiedlichen Abstände der Träger 36, 37 zum Linsensystem 38, da diese Abstände die Position und Lage der Schärfeebene im Messraum bestimmen. Wenn die Wegdifferenz über den/die jeweiligen Spiegel 26, 27, 28 bis zum Objekt 10 nicht sehr groß ist, könnte beispielsweise auch nur ein einziger Träger verwendet werden, der entweder stufenweise abgesetzte Abschnitte aufweist oder der zwar eben aber entsprechend stark geneigt ist, um die Wegdifferenz im Mittel zu kompensieren.

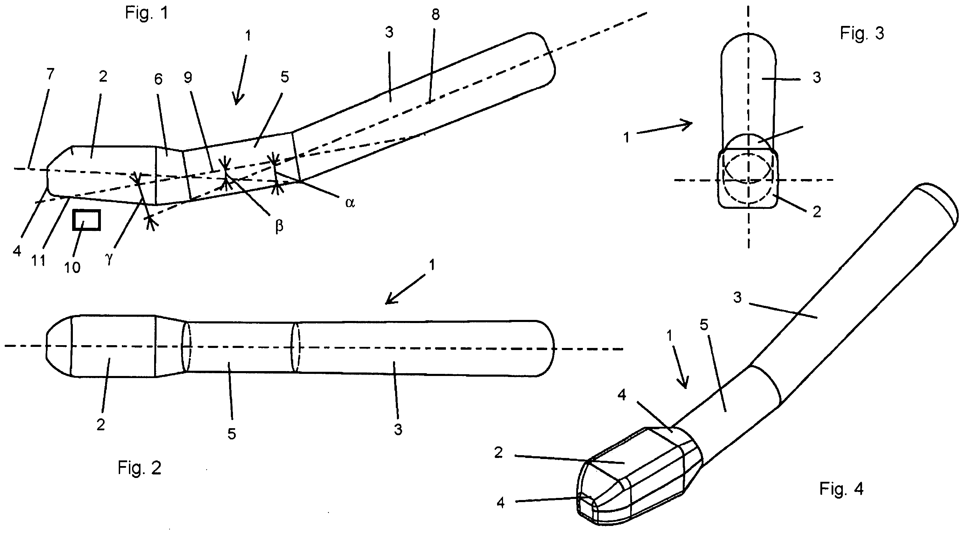

In Fig. 9 ist eine Schrägstellung der Träger 36, 37 zur Ausbreitungsrichtung des Lichts zu sehen, d.h. dass die Träger 36, 37 nicht exakt im rechten Winkel zu Ausbreitungsrichtung des Lichts liegen. Diese Ausführungsform der Erfindung ist dann von Vorteil, wenn der Projektor 14 bzw. dessen optische Mittelachse 39 wie in der in den Fig. 1 bis 8 dargestellten Ausführungsform in einem Winkel β größer 0° zum Aufnahmebereich 2 ausgerichtet ist, insbesondere die optische Mittelachse 39 nicht im rechten Winkel zur optischen Mittelachse 40 der Kameras 32 ausgerichtet ist. Die Anordnung des Projektors 14 im abgewinkelten Übergangsbereich zwischen dem Aufnahmebereich 2, in dem sich die Kameras 32 befinden, und dem Mittelbereich 5 ist besonders vorteilhaft, da auf diese Weise der Aufnahmebereich 2 relativ kurz gehalten werden kann, was die Handhabung des Handstücks 1 wesentlich verbessert. Durch die Schrägstellung der Träger 36, 37 können durch die Schrägstellung des Projektors 14 verursachte Unschärfen des auf des Objekt 10 projizierten Musters ausgeglichen werden.

## Patentansprüche

1. Vorrichtung zum Aufnehmen von Bildern von dreidimensionalen Objekten (10), insbesondere Zähnen, mit einer Lichtquelle (22), welche ein Lichtbündel (23, 23a, 23b) abstrahlt, und einer Kamera (32) zum Aufnehmen von Bildern des Objektes (10), wobei im Strahlengang der Lichtquelle (22) wenigstens ein transparenter Träger (36, 37) mit einem Muster angeordnet ist, das auf das Objekt (10) projiziert wird, **dadurch gekennzeichnet, dass** wenigstens zwei Spiegel (27, 28) jeweils ein Lichtbündel (23a, 23b) von der Lichtquelle (22) aus unterschiedlichen Richtungen auf das Objekt (10) reflektieren, dass die Weglängen des Lichts von der Lichtquelle (22) über die Spiegel (27, 28) bis zum Objekt (10) unterschiedlich sind, dass der Träger (36, 37) Abschnitte aufweist, die in Richtung des Strahlengangs zueinander versetzt sind, oder dass der Träger zwar eben aber entsprechend stark geneigt ist, und dass im Strahlengang jedes Lichtbündels (23a, 23b) ein Abschnitt eines Trägers liegt, so dass die Länge des Wegs, den das Licht mit dem Muster vom Träger (36, 37) bis zum Objekt (10) zurücklegt, für das gesamte Lichtbündel (23a, 23b) wieder vereinheitlicht ist, und die Abweichung der Weglänge des Lichts von der Lichtquelle (22) über die Spiegel (27,28) bis zum Objekt (10) kompensiert wird.

2. Vorrichtung zum Aufnehmen von Bildern von dreidimensionalen Objekten (10), insbesondere Zähnen, mit einer Lichtquelle (22), welche Lichtbündel (23, 23a, 23b) abstrahlt, und einer Kamera (32) zum Aufnehmen von Bildern des Objektes (10), wobei im Strahlengang der Lichtquelle (22) wenigstens ein transparenter Träger (36, 37) mit einem Muster angeordnet ist, das auf das Objekt (10) projiziert wird, **dadurch gekennzeichnet, dass** wenigstens zwei Spiegel (27, 28) jeweils ein Lichtbündel (23a, 23b) von der Lichtquelle (22) aus unterschiedlichen Richtungen auf das Objekt (10) reflektieren, dass die Weglängen des Lichts von der Lichtquelle (22) über die Spiegel (27, 28) bis zum Objekt (10) unterschiedlich sind, dass wenigstens zwei Träger (36, 37) in Richtung des Strahlengangs zueinander versetzt sind, und dass im Strahlengang jedes Lichtbündels (23a, 23b) jeweils ein eigener Träger (36, 37) liegt, so dass die Länge des Wegs, den das Licht mit dem Muster vom Träger (36, 37) bis zum Objekt (10) zurücklegt, für das gesamte Lichtbündel (23a, 23b) wieder vereinheitlicht ist, und die Abweichung der Weglänge des Lichts von der Lichtquelle (22) über die Spiegel (27,28) bis zum Objekt (10) kompensiert wird.

3. Vorrichtung nach Anspruch 2, **dadurch gekennzeichnet, dass** wenigstens ein Träger (36, 37) Abschnitte aufweist, die in Richtung des Strahlengangs zueinander versetzt sind.

4. Vorrichtung nach einem der Ansprüche 1 bis 3, **dadurch gekennzeichnet, dass** wenigstens ein Träger (36, 37) mit Bezug zur Ausbreitungsrichtung des Lichts in einem Winkel ungleich 90° geneigt ist.

5. Vorrichtung nach einem der Ansprüche 1 bis 4, **dadurch gekennzeichnet, dass** im Strahlengang jeweils eines Lichtbündels (23a, 23b) der Lichtquelle (22) ein Abschnitt eines Trägers oder jeweils ein eigener Träger (36, 37) liegt.

6. Vorrichtung nach einem der Ansprüche 1 bis 5, **dadurch gekennzeichnet, dass** die Spiegel (27, 28) unterschiedlich ausgerichtete optische Achsen (29, 30) aufweisen.

7. Vorrichtung nach einem der Ansprüche 1 bis 6, **dadurch gekennzeichnet, dass** ein erster Spiegel (27) indirekt über einen Umlenkspiegel (26) und ein zweiter Spiegel (28) direkt von der Lichtquelle (22) beschienen wird.

8. Vorrichtung nach einem der Ansprüche 1 bis 7, **dadurch gekennzeichnet, dass** zwei Spiegel (27, 28) auf unterschiedlichen Seiten der Kamera (32) liegen.

9. Vorrichtung nach Anspruch 8, **dadurch gekennzeichnet, dass**, von der Lichtquelle (22) aus betrachtet, ein erster Spiegel (27) vor einem Objektiv (33) der Kamera (32) und ein zweiter Spiegel (28) hinter dem Objektiv (33) liegt.

10. Vorrichtung nach einem der Ansprüche 1 bis 9, **gekennzeichnet durch** zwei Kameras (32) mit einander überschneidenden Aufnahmebereichen, welche Bilder aus unterschiedlichen Richtungen aufnehmen.

11. Vorrichtung nach Anspruch 10, **dadurch gekennzeichnet, dass** die Objektive (33) der Kameras (32), von der Lichtquelle (22) aus betrachtet, nebeneinander liegen.

12. Vorrichtung nach einem der Ansprüche 1 bis 10, **dadurch gekennzeichnet, dass** die optischen Achsen (29, 30) der Spiegel (27, 28) in einer Ebene (ω) liegen.

13. Vorrichtung nach Anspruch 11 und 12, **dadurch gekennzeichnet, dass** die Objektive (33) der Kameras (32) symmetrisch zu der Ebene (ω) liegen, in denen die optischen Achsen (29, 30) der Spiegel (27, 28) liegen.

14. Vorrichtung nach einem der Ansprüche 1 bis 13, **dadurch gekennzeichnet, dass** die Lichtquelle (22) ein nach einem Zufallsprinzip angeordnetes Muster auf das Objekt (10) projiziert.

15. Vorrichtung nach Anspruch 14, **dadurch gekennzeichnet, dass** das Muster im Wesentlichen aus zufällig verteilten, gegebenenfalls unregelmäßig geformten, Punkten und/oder Linien besteht.

16. Vorrichtung nach einem der Ansprüche 1 bis 15, mit einem Aufnahmebereich (2), in dem die Spiegel (26, 27, 28) angeordnet sind, und mit einem Griffbereich (3), **dadurch gekennzeichnet, dass** die Kamera (32) und/oder die Lichtquelle (22) im Aufnahmebereich (2) angeordnet ist/sind und dass der Aufnahmebereich (2) entgegen der Projektionsrichtung um einen Winkel (α) zwischen 10° und 40° gegenüber dem Griffbereich (3) geneigt ist.

17. Vorrichtung nach Anspruch 16, **dadurch gekennzeichnet, dass** zwischen dem Griffbereich (3) und dem Aufnahmebereich (2) ein Mittelbereich (5) angeordnet ist, der gegenüber dem Griffbereich (3) und dem Aufnahmebereich (2) um jeweils einen Winkel (β, γ) von wenigstens 3° geneigt ist.

18. Vorrichtung nach Anspruch 16 oder 17, **dadurch gekennzeichnet, dass** der Mittelbereich (5) gegenüber dem Griffbereich (3) um einen Winkel (γ) von 7° bis 25° geneigt ist.

19. Vorrichtung nach einem der Ansprüche 16 bis 18, **dadurch gekennzeichnet, dass** der Aufnahmebereich (2) gegenüber dem Mittelbereich (5) um einen Winkel (β) von 3° bis 15° geneigt ist.

20. Vorrichtung nach einem der Ansprüche 16 bis 19, **dadurch gekennzeichnet, dass** die Lichtquelle (22) im Übergangsbereich zwischen dem Aufnahmebereich (2) und dem daran anschließenden Mittelbereich (5) oder Griffbereich (3) angeordnet ist.

## Claims

1. Device to take pictures of three-dimensional objects (10), especially teeth, with a light source (22) that emits a light beam (23, 23a, 23b) and a camera (32) to take pictures of the object (10), whereby at least a transparent base (36, 37) with a pattern is present within the beam path of the light source (22) that is projected onto the object (10), **characterized in that** at least two mirrors (27, 28) each reflect a light beam (23a, 23b) from the light source (22) onto the object (10) from different directions, that the light path lengths from the light source (22) to the mirrors (27, 28) all the way to the object (10) are different, that the base (36, 37) has sections that are offset to one another in the direction of the beam path or that the support piece is level but is sufficiently tilted accordingly and that a section of the support piece lies in the beam path of each light beam (23a, 23b), and that the length of the path that the light with the pattern takes from the base (36, 37) to the object (10) is unified again for the entire light beam (23a, 23b) and the deviation of the light path length from the light source (22) to the mirrors (27, 28) all the way to the object (10) is compensated.

2. Device to take pictures of three-dimensional objects (10), especially teeth, with a light source (22) that emits light beams (23, 23a, 23b) and a camera (32) to take pictures of the object (10), whereby at least a transparent base (36, 37) with a pattern is present within the beam path of the light source (22) that is projected onto the object (10), **characterized in that** at least two mirrors (27, 28) each reflect a light beam (23a, 23b) from the light source (22) onto the object (10) from different directions, that the light path lengths from the light source (22) to the mirrors (27, 28) all the way to the object (10) are different, that at least two bases (36, 37) are offset to one another in the direction of the beam path and that, within the beam path of each light beam (23a, 23b), each has its own support piece (36, 37) lying there in such a way that the length of the path that the light with the pattern takes from the support piece (36, 37) to the object (10) is unified again for the entire light beam (23a, 23b) and the deviation of the light path length from the light source (22) to the mirrors (27, 28) all the way to the object (10) is compensated.

3. Device according to claim 2, **characterized in that** at least one base (36, 37) has sections that are offset to one another in the direction of the beam path.

4. Device according to one of the claims 1 to 3, **characterized in that** at least one base (36, 37) is tilted at an angle not equalling 90° with reference to the direction of dispersion of the light.

5. Device according to one of the claims 1 to 4, **characterized in that** a section of a base lies within the beam path of a light beam (23a, 23b) from the light source (22) respectively or each has its own base (36, 37).

6. Device according to one of the claims 1 to 5, **characterized in that** the mirrors (27, 28) have optical axes (29, 30) that are oriented differently.

7. Device according to one of the claims 1 to 6, **characterized in that** a first mirror (27) is indirectly illuminated using a deflection mirror (26) and a second mirror (28) is directly illuminated from the light source (22).

8. Device according to one of the claims 1 to 7, **characterized in that** two mirrors (27, 28) are located at different sides of the camera (32).

9. Device according to claim 8, **characterized in that**, from the perspective of the light source (22), a first mirror (27) is located in front of an objective (33) of the camera (32) and a second mirror (28) is located behind the lens (33).

10. Device according to one of the claims 1 to 9, **characterized by** two cameras (32) with overlapping areas of sight that take pictures from different directions.

11. Device according to claim 10, **characterized in that** the objectives (33) of the cameras (32) are located next to each other from the perspective of the light source (22).

12. Device according to one of the claims 1 to 10, **characterized in that** the optical axes (29, 30) of the mirrors (27, 28) are located on a plane (ω).

13. Device according to one of the claims 11 to 12, **characterized in that** the lenses (33) of the cameras (32) lie symmetrical to the plane (ω) on which the optical axes (29, 30) of the mirrors (27, 28) are located.

14. Device according to one of the claims 1 to 13, **characterized in that** the light source (22) projects a pattern onto the object (10) that is arranged according to a random principal.

15. Device according to claim 14, **characterized in that** the pattern primarily consists of dots and/or lines that are randomly distributed and if applicable irregularly shaped.

16. Device according to one of the claims 1 to 15, with a recording area (2) in which the mirrors (26, 27, 28) are arranged and with a grip area (3), **characterized in that** the cameras (32) and/or the light source (22) is/are arranged within the recording area (2) and that the recording area (2) is tilted toward the direction of projection at an angle (α) between 10° and 40° with respect to the grip area (3).

17. Device according to claim 16, **characterized in that** in middle area (5) is located between the grip area (3) and the recording area (2) that is respectively tilted at an angle (ß, y) of at least 3° with respect to the grip area (3) and the recording area (2).

18. Device according to claim 16 or 17, **characterized in that** the middle area (5) is tilted at an angle (y) of 7° to 25° with respect to the grip area (3).

19. Device according to one of claims 16 to 18, **characterized in that** the recording area (2) is tilted at an angle (ß) of 3° to 15° with respect to the middle area (5).

20. Device according to one of the claims 16 to 19, **characterized in that** the light source (22) is located within the transition area between the recording area (2) and the middle area (5) or the grip area (3) that subsequently follows it.

## Revendications

1. Dispositif de capture d'images d'objets tridimensionnels (10), notamment de dents, avec une source lumineuse (22), laquelle diffuse un faisceau lumineux (23, 23a, 23b) et une caméra (32) pour la capture d'images de l'objet (10), au moins un support transparent (36, 37) étant disposé dans la trajectoire du faisceau de la source lumineuse (22) avec un dessin, qui est projeté sur l'objet (10), **caractérisé en ce qu'**au moins deux miroirs (27, 28) réfléchissent respectivement un faisceau lumineux (23a, 23b) de la source lumineuse (22) de directions différentes sur l'objet (10), **en ce que** les longueurs de trajectoire de la lumière de la source lumineuse (22) sur les miroirs (27, 28) jusqu'à l'objet (10) sont différentes, **en ce que** le support (36, 37) comporte des sections qui sont déportées l'une par rapport à l'autre en direction de la trajectoire du faisceau ou **en ce que** le support est à cet effet toutefois fortement incliné et **en ce que** dans la trajectoire du faisceau de chaque faisceau lumineux (23a, 23b) se trouve une section d'un support de telle manière que la longueur de la trajectoire, que parcourt la lumière avec le modèle du support (36, 37) jusqu'à l'objet (10), est à nouveau uniformisée pour tout le faisceau lumineux (23a, 23b) et l'écart de la longueur de trajectoire de la lumière de la source lumineuse (22) par les miroirs (27, 28) jusqu'à l'objet (10) est compensé.

2. Dispositif de capture d'images d'objets tridimensionnels (10), notamment de dents, avec une source lumineuse (22), laquelle diffuse un faisceau lumineux (23, 23a, 23b) et une caméra (32) pour la capture d'images de l'objet (10), au moins un support transparent (36, 37) étant disposé dans la trajectoire du faisceau de la source lumineuse (22) avec un dessin, qui est projeté sur l'objet (10), **caractérisé en ce qu'**au moins deux miroirs (27, 28) réfléchissent respectivement un faisceau lumineux (23a, 23b) de la source lumineuse (22) de directions différentes sur l'objet (10), **en ce que** les longueurs de trajectoire de la lumière de la source lumineuse (22) sur les miroirs (27, 28) jusqu'à l'objet (10) sont différentes, **en ce qu'**au moins deux supports (36, 37) sont déportés l'un par rapport à l'autre en direction de la trajectoire du faisceau et **en ce que** dans la trajectoire du faisceau de chaque faisceau lumineux (23a, 23b) se trouve respectivement un support propre (36, 37) de telle manière que la longueur de la trajectoire, que parcourt la lumière avec le modèle du support (36, 37) jusqu'à l'objet (10), est à nouveau uniformisée pour tout le faisceau lumineux (23a, 23b) et l'écart de la longueur de trajectoire de la lumière de la source lumineuse par les miroirs (27, 28) jusqu'à l'objet (10) est compensé.

3. Dispositif selon la revendication 2, **caractérisé en ce qu'**au moins un support (36, 37) comporte des sections qui sont déportées l'une par rapport à l'autre en direction de la trajectoire du faisceau.

4. Dispositif selon l'une quelconque des revendications 1 à 3, **caractérisé en ce que** au moins un support (36, 37) est incliné dans un angle différent de 90° par rapport à la direction d'expansion de la lumière.

5. Dispositif selon l'une quelconque des revendications 1 à 4, **caractérisé en ce que** dans la trajectoire du faisceau respectivement d'un faisceau lumineux (23a, 23b) de la source lumineuse (22) se trouve une section d'un support ou respectivement un support propre (36, 37).

6. Dispositif selon l'une quelconque des revendications 1 à 5, **caractérisé en ce que** les miroirs (27, 28) comportent des axes optiques (29, 30) orientés de façon différente.

7. Dispositif selon l'une quelconque des revendications 1 à 6, **caractérisé en ce qu'**un premier miroir (27) est indirectement éclairé par un miroir de renvoi (26) et un deuxième miroir (28) est directement éclairé par la source lumineuse (22).

8. Dispositif selon l'une quelconque des revendications 1 à 7, **caractérisé en ce que** deux miroirs (27, 28) se trouvent sur des côtés différents de la caméra (32).

9. Dispositif selon la revendication 8, **caractérisé en ce qu'**un premier miroir, vu de la source lumineuse (22), se situe devant un objectif (33) de la caméra (32) et un deuxième miroir (28) derrière l'objectif (33).

10. Dispositif selon l'une quelconque des revendications 1 à 9, **caractérisé par** deux caméras (32) avec des zones de capture se recoupent, lesquelles capturent des images venant de directions différentes.

11. Dispositif selon la revendication 10, **caractérisé en ce que** les objectifs (33) des caméras (32) se trouvent, vus de la source lumineuse (22), l'un à côté de l'autre

12. Dispositif selon l'une quelconque des revendications 1 à 10, **caractérisé en ce que** les axes optiques (29, 30) des miroirs (27, 28) se situent dans un plan (ω).

13. Dispositif selon la revendication 11 et 12 **caractérisé en ce que** les objectifs (33) des caméras (32) se trouvent symétriques par rapport au plan (ω), dans lequel se trouvent les axes optiques (29, 30) des miroirs (27, 28).

14. Dispositif selon l'une quelconque des revendications 1 à 13, **caractérisé en ce que** la source lumineuse (22) projette sur l'objet (10) un dessin disposé selon un principe aléatoire.

15. Dispositif selon la revendication 14, **caractérisé en ce que** le dessin est composé pour l'essentiel de points et/ou de lignes répartis de façon aléatoire, le cas échéant formés de façon irrégulière.

16. Dispositif selon l'une quelconque des revendications 1 à 15 avec une zone de capture (2) dans laquelle les miroirs (26, 27, 28) sont disposés, et avec une zone de saisie (3), **caractérisé en ce que** la caméra (32) et/ou la source lumineuse (22) est disposée dans la zone de capture (2) et **en ce que** la zone de capture (2) est inclinée opposée à la direction de projection d'un angle (α) entre 10° et 40° par rapport à la zone de saisie (3).

17. Dispositif selon la revendication 16, **caractérisé en ce qu'**entre la zone de saisie (3) et la zone de capture (2) est disposée une zone centrale (5) qui est inclinée par rapport à la zone de saisie (3) et la zone de capture (2) d'un angle respectif (β, γ) d'au moins 3°.

18. Dispositif selon la revendication 16 ou 17, **caractérisé en ce que** la zone centrale (5) est inclinée par rapport à la zone de saisie (3) d'un angle (γ) de 7° à 25°.

19. Dispositif selon l'une quelconque des revendications 16 à 18, **caractérisé en ce que** la zone de capture (2) est inclinée par rapport à la zone centrale (5) d'un angle (β) de 3° à 15°.

20. Dispositif selon l'une quelconque des revendications 16 à 19, **caractérisé en ce que** la source lumineuse (22) est disposée dans la zone de transition entre la zone de capture (2) et la zone centrale (5) s'y raccordant ou la zone de saisie (3).
